(19) Europäisches Patentamt
European Patent Office
Office européen des brevets

(11) EP 2 526 139 B1

(12) **EUROPÄISCHE PATENTSCHRIFT**

(45) Veröffentlichungstag und Bekanntmachung des Hinweises auf die Patenterteilung:
**17.12.2014 Patentblatt 2014/51**

(21) Anmeldenummer: **11701378.9**

(22) Anmeldetag: **18.01.2011**

(51) Int Cl.:
***C08G 64/34*** *(2006.01)*

(86) Internationale Anmeldenummer:
**PCT/EP2011/050626**

(87) Internationale Veröffentlichungsnummer:
**WO 2011/089120 (28.07.2011 Gazette 2011/30)**

(54) **VERFAHREN ZUR AKTIVIERUNG VON DOPPELMETALLCYANIDKATALYSATOREN ZUR HERSTELLUNG VON POLYETHERCARBONATPOLYOLEN**

METHOD FOR ACTIVATING DOUBLE METAL CYANIDE CATALYSTS TO PRODUCE POLYETHER CARBONATE POLYOLS

PROCÉDÉ D'ACTIVATION DE CATALYSEURS DE CYANURE MÉTALLIQUE DOUBLE POUR LA FABRICATION DE POLYOLS DE POLYÉTHER CARBONATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2010 EP 10000511**

(43) Veröffentlichungstag der Anmeldung:
**28.11.2012 Patentblatt 2012/48**

(73) Patentinhaber: **Bayer Intellectual Property GmbH**
**40789 Monheim (DE)**

(72) Erfinder:
- **GÜRTLER, Christoph**
**50676 Köln (DE)**
- **GRASSER, Stefan**
**51377 Leverkusen (DE)**
- **HOFMANN, Jörg**
**47800 Krefeld (DE)**
- **WOLF, Aurel**
**42489 Wülfrath (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**DE-A1-102008 000 478**
**US-A1- 2003 149 232**
**US-A1- 2006 223 973**
**US-A1- 2008 021 154**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 526 139 B1

Printed by Jouve, 75001 PARIS (FR)

## Beschreibung

Die vorliegende Erfindung betrifft ein Verfahren zur Aktivierung von Doppelmetallcyanid (DMC)-Katalysatoren für die Herstellung von Polyethercarbonatpolyolen durch katalytische Copolymerisation von Kohlendioxid ($CO_2$) mit Alkylenoxiden in Gegenwart einer oder mehrerer H-funktionellen Startersubstanzen.

Die Herstellung von Polyethercarbonatpolyolen durch katalytische Umsetzung von Alkylenoxiden (Epoxiden) und Kohlendioxid in An- oder Abwesenheit von H-funktiönellen Startersubstanzen (Startern) wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion z.B. unter Verwendung einer H-funktionellen Starterverbindung ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Formel (I) gezeigte cyclische Carbonat (beispielsweise für R = $CH_3$ Propylencarbonat).

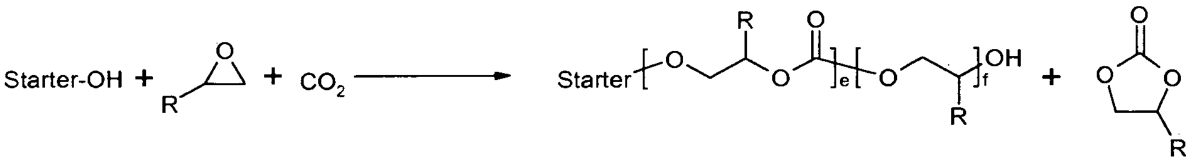
(I)

Als Aktivierung im Sinne dieser Erfindung wird ein Schritt bezeichnet, bei dem eine Teilmenge Alkylenoxidverbindung, gegebenenfalls in Gegenwart von $CO_2$, zum DMC-Katalysator gegeben wird und dann die Zugabe der Alkylenoxidverbindung unterbrochen wird, wobei aufgrund einer folgenden exothermen chemischen Reaktion eine Temperaturspitze ("Hotspot") und/oder ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten des Hotspot. Im Allgemeinen kann dem Aktivierungsschritt ein Schritt zum Trocknen des DMC-Katalysators und ggf. des Starters durch erhöhte Temperatur und/oder reduziertem Druck vorgelagert sein, wobei dieser Schrift der Trocknung nicht Teil des Aktivierungsschrittes im Sinne der vorliegenden Erfindung ist.

Die Aktivierung eines DMC-Katalysators zum Zwecke der Homo-Polymerisation von Alkylenoxiden (d.h. in Abwesenheit von Kohlendioxid) ist bekannt. EP-A 0 981 407 offenbart die Aktivierung eines DMC-Katalysators zum Zwecke der Alkylenoxid Polymerisation. Das Erhitzen einer Mischung aus Katalysator und Starter unter Vakuum wird nun dadurch erweitert, dass gleichzeitig Inertgas durch die Mischung strömt oder dass das Erhitzen einer Mischung aus Katalysator und Starter unter Vakuum in Gegenwart eines organischen Lösemittels durchgeführt wird. Dies führt zu einer schnelleren Katalysator-Aktivierung und zu einer erhöhten Produkt-Qualität. Von Nachteil ist, dass der Einsatz eines Lösemittels zu erhöhten Kosten führt (Materialkosten für das Lösungsmittel sowie zusätzlicher Verfahrensschritt zur Entfernung des Lösungsmittels aus dem Produkt) und dass die Raum-Zeit-Ausbeute verringert ist. Die Verwendung bei der Copolymerisation von Kohlendioxid ($CO_2$) mit Alkylenoxiden in Gegenwart einer H-funktionellen Verbindung wird in EP-A 0 981 407 nicht offenbart.

EP-A 1474464 offenbart eine Verringerung der Induktionszeit zur Aktivierung des Katalysators um Polyether herzustellen, die dadurch erreicht wird, dass zu einer Mischung aus DMC-Katalysator und Starter ein Alkylenoxid bei einem internen Reaktordruck von weniger als 1 bar gegeben wird. Die Verwendung bei der Copolymerisation von Kohlendioxid ($CO_2$) mit Alkylenoxiden in Gegenwart einer H-funktionellen Verbindung wird in EP-A 0 981 407 nicht offenbart.

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem CoKatalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 in den Beispielen 1 bis 7 angegebene Menge von 60 Gew.-% Alkylenoxidverbindung relativ zum Starter ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 beschreibt ein Verfahren, bei dem der DMC-Katalysator zunächst zumindest mit einer Teilmenge des Kohlendioxids in Kontakt gebracht wird, bevor man das Alkylenoxid zufügt. In einer bevorzugten Ausführungsform wird der wasserfreie Katalysator in einem inerten Reaktionsmedium gelöst bzw. dispergiert. Aus WO-A 2008/013731 ((Seite 10; Beispiele C1 bis 6) und WO-A 2006/103214, Absatz [0042] kann der Fachmann aber die Lehre entnehmen, dass Kohlendioxid den DMC-Katalysator desaktiviert: Insofern würde der Fachmann einen Reaktionsschritt, bei dem der Katalysator zuerst mit zumindest einer Teilmenge Kohlendioxids in Kontakt gebracht wird, bevor er nach einiger Zeit zum ersten Mal mit Alkylenoxid in Kontakt kommt, nicht als einen Schritt zur Aktivierung des DMC-Katalysators ansehen (siehe hierzu auch Beispiel 13 (Vergleich), bei dem nach erfolgter Kohlendioxidzugabe, Wartezeit von 20 Minuten und anschließender Zugabe von Propylenoxid eine Aktivierung des DMC-Katalysators nicht festzustellen war (kein Hotspot)).

US-A 2006/0223973 bzw. WO-A 2006/103214 offenbart ein Verfahren zur Herstellung von Polyethercarbonatpolyolen, wobei die resultierende Struktur des Polyethercarbonatpolyols geregelt wird. US-A 2006/0223973 offenbart, "freies" Wasser durch Vakuum von $\leq$ 10 mm Hg (13 mbar) und Temperaturen $\geq$ 100 °C zu entfernen und an der Katalysatoroberfläche gebundenes Wasser durch Zugabe einer Verbindung, die mit Wasser reagiert (z.B. einer Alkylenoxidverbindung), zu entfernen. US-A 2006/0223973 offenbart überdies, dass die Zugabe der Alkylenoxidverbindung zum DMC-Katalysator einmalig oder mehrmalig erfolgen kann. In den Beispielen erfolgt jeweils ein einziger Aktivierungsschritt, indem beispielsweise im Falle der allgemeinen Vorschrift zur Durchführung im kleinen Maßstab die Teilmenge von 5 g an der Gesamtmenge von 175 g Propylenoxid zur Aktivierung des DMC-Katalysators eingesetzt wurde, und im Falle der allgemeinen Vorschrift zur Durchführung im großen Maßstab die Teilmenge von 200 g an der Gesamtmenge von 2700 g Propylenoxid zur Aktivierung des DMC-Katalysators eingesetzt wurde. Der größte resultierende Wert an im Polyethercarbonatpolyol eingebauten $CO_2$ betrug 18,6 Gew.-% $CO_2$ (Beispiel 9, angegeben als 23,8 Gew.-% $CO_3$), wobei aber eine unvorteilhaft hohe Polydispersität von 6,8 erzielt wurde. Auch US-A 2003/149232 offenbart ein Verfahren zur Herstellung von Polyethercarbonatpolyolen, wobei zur Aktivierung des DMC-Katalysators ein Aktivierungsschritt vorgenommen wird, indem beispielsweise einmalig eine Zugabe der Teilmenge von 5 g an der Gesamtmenge von 175 g Propylenoxid zur Aktivierung des DMC-Katalysators bei 130°C eingesetzt wurde. Im Falle der Bewertung der Verfahren offenbart in US-A 2003/149232 bzw. US-A 2006/0223973 ist folgendes zu beachten: Im Sinne der vorliegenden Erfindung erfordert ein Schritt zur Aktivierung, dass die Zugabe der Alkylenoxidverbindung unterbrochen wird, wobei aufgrund einer folgenden exothermen chemischen Reaktion eine Temperaturspitze ("Hotspot") und/oder ein Druckabfall im Reaktor beobachtet wird. Daher ist eine Dosierung von Alkylenoxid, die ohne Unterbrechung für die Copolymerisation fortgesetzt wird, nicht als Schritt der Aktivierung im Sinne der vorliegenden Erfindung anzusehen.

DE-A 10 2008 000 478 offenbart ein Verfahren zur Herstellung von Polyethercarbonatpolyolen, wobei zur Aktivierung des DMC-Katalysators einmalig eine Teilmenge von 0,1 - 20 Gew.-% (bezogen auf die Gesamtmenge an Alkylenoxidverbindungen) einer oder mehrerer Alkylenoxidverbindungen zum Gemisch aus DMC-Katalysator und Starterverbindung dosiert wird. Die anschließende Copolymerisation erfolgt bei Drücken von 0 - 20 bar und einer Temperatur von 60-150°C. In den einzelnen Verfahrensschritten gemäß DE-A 10 2008 000 478 wird kontinuierlich (d.h. ohne Unterbrechung) Alkylenoxid zudosiert. Somit unterscheidet sich das Verfahren darin, dass gemäß DE-A 10 2008 000 478 keine Unterbrechung der Dosierung von Alkylenoxid zur Aktivierung des DMC-Katalysators erfolgt.

US-A 2008/0021154 bzw. WO-A 2008/013731 offenbart ein Verfahren zur Herstellung von Polyethercarbonatpolyolen, wobei zur Aktivierung des DMC-Katalysators einmalig eine Teilmenge von 53 g an der Gesamtmenge von 1151 g Propylenoxid zum Gemisch aus DMC-Katalysator und Starterverbindung bei 130°C dosiert wird und wobei die Zugabe des Propylenoxids zur Aktivierung des Katalysators in Vakuum erfolgt, Nachdem der Druck angestiegen und nachfolgend wieder um 50% abgenommen hatte, wurde die Reaktionstemperatur eingestellt, der Reaktor mit Kohlendioxid beaufschlagt und 1098 g Propylenoxid zur Copolymerisation kontinuierlich zugeführt.

WO-A 2008/058913 offenbart ein Verfahren zur Herstellung von Polyethercarbonatpolyolen, wobei die Zugabe von Kohlendioxid vor, nach oder gleichzeitig mit der Zugabe der Alkylenoxidverbindung zu dem Gemisch aus Starterverbindung und DMC-Katalysator erfolgen kann, wobei in einer besonderen Ausführungsform zur Aktivierung des DMC-Katalysators einmalig eine Teilmenge von 0,1 - 20 Gew.-% (bezogen auf die Gesamtmenge an Alkylenoxidverbindungen) einer oder mehrerer Alkylenoxidverbindungen zum Gemisch aus DMC-Katalysator und Starterverbindung dosiert wird. Bei den in den Beispielen offenbarten Herstellverfahren dieser Anmeldung resultieren Polyethercarbonatpolyole mit einem Anteil an eingebautem Kohlendioxid von unter 10 Gew.-% (bezogen auf $CO_2$) und relativ hohen Werten für die Dispersität von > 1,5.

Es war daher Aufgabe der vorliegenden Erfindung, ein Verfahren zur Herstellung von Polyethercarbonatpolyolen bereitzustellen, welches sowohl zu einem hohen Gehalt an eingebautem $CO_2$ führt und gleichzeitig eine günstige Selektivität (d.h. niedriges Verhältnis von cyclischem Carbonat zu linearem Polyethercarbonat) und niedrige Polydispersität des resultierenden Polyethercarbonatpolyols bewirkt. Desweiteren soll das Verfahren sicher betrieben werden können, ohne während der Reaktion spontan, d.h. ungewollt eintretender Temperaturspitzen ("Hotspots").

Überraschend wurde gefunden, dass die erfindungsgemäße Aufgabe gelöst wird durch ein Verfahren zur Herstellung von Polyethercarbonatpolyolen aus einer oder mehreren H-funktionellen Startsubstanzen, eines oder mehrerer Alkylenoxide und Kohlendioxid in Gegenwart eines DMC-Katalysators, dadurch gekennzeichnet, dass

(α) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

(β) zur Aktivierung

(β1) in einem ersten Aktivierungsschritt eine erste Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe der Teilmenge an Alkylenoxid unter Abwesenheit von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird,

(β2) in einem zweiten Aktivierungsschritt nach der im vorangegangenen Aktivierungsschritt erreichten Temperaturspritze eine zweite Teilmenge (bezogen auf die Gesamtmenge der bei der Aktivierung und Copolymerisation eingesetzten Menge an Alkylenoxiden) von einem oder mehreren Alkylenoxiden zu der aus dem vorangegangenen Aktivierungsschritt resultierenden Mischung zugesetzt wird, wobei diese Zugabe der Teilmenge an Alkylenoxid unter Abwesenheit von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird,

(β3) gegebenenfalls in einem dritten Aktivierungsschritt bzw. weiteren Aktivierungsschritten nach der im vorangegangenen Aktivierungsschritt erreichten Temperaturspitze der Schritt (β2) null bis fünfmal, bevorzugt ein bis viermal, besonders bevorzugt genau einmal wiederholt wird, wobei diese Zugabe der Teilmenge bzw. Zugaben der Teilmengen an Alkylenoxid unter Abwesenheit von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird,

(β4) gegebenenfalls in einem weiteren Aktivierungsschritt bzw. weiteren Aktivierungsschritten nach der im vorangegangenen Aktivierungsschritt erreichten Temperaturspitze der Schritt (β3) ein bis fünfmal, bevorzugt ein bis viermal, besonders bevorzugt genau einmal wiederholt wird, wobei diese Zugabe der Teilmenge bzw. Zugaben der Teilmengen an Alkylenoxid in Gegenwart von $CO_2$ erfolgt, und wobei dann die aufgrund der folgenden exothermen chemischen Reaktion auftretende Temperaturspitze ("Hotspot") und/oder ein Druckabfall im Reaktor jeweils abgewartet wird,

(γ) ein oder mehrere Alkylenoxide und Kohlendioxid zu der aus Schritt (β) resultierenden Mischung fortwährend dosiert werden ("Copolymerisation"). Die für die Copolymerisation eingesetzten Alkylenoxide können gleich oder verschieden sein von den bei der Aktivierung eingesetzten Alkylenoxiden,

wobei die bei der Aktivierung in den Schritten β1 bis β4 jeweils eingesetzte Teilmenge von einem oder mehreren Alkylenoxiden 2,0 bis 15,0 Gew.-%, bevorzugt 2,5 bis 14,0 Gew.-%, besonders bevorzugt 3,0 bis 13,0 Gew.-% (bezogen auf die Gesamtmenge der bei der Aktivierung und Copolymerisation eingesetzten Menge an Alkylenoxiden).

Zu Schritt (α):

Zur Herstellung von Polyethercarbonatpolyolen durch katalytische Anlagerung von Alkylenoxiden (Epoxiden) und Kohlendioxid an H-funktionelle Startersubstanzen (Starter) in Gegenwart der erfindungsgemäßen DMC-Katalysatoren wird die H-funktionelle Startersubstanz oder ein Gemisch aus mindestens zwei H-funktionellen Startersubstanzen vorgelegt. Gegebenenfalls wird in Schritt (α)

(α1) die H-funktionelle Startersubstanz oder ein Gemisch aus mindestens zwei H-funktionellen Startersubstanzen vorgelegt und
(α2) die Temperatur der Startersubstanz oder des Gemisches auf 50 bis 200°C, bevorzugt 80 bis 160°C, besonders bevorzugt bei 100 bis 140°C gebracht und/oder der Druck im Reaktor auf weniger als 500 mbar, bevorzugt 5 mbar bis 100 mbar erniedrigt. Hierbei kann auch ein Stickstoff-Strom durch den Reaktor geleitet werden.

Der Doppelmetallcyanid-Katalysator kann zu der H-funktionellen Startersubstanz oder dem Gemisch von mindestens zwei H-funktionellen Startersubstanzen in Schritt (α1) oder unmittelbar anschließend in Schritt (α2) zugesetzt werden.

Der DMC-Katalysator kann in fester Form oder als Suspension in einer H-funktionellen Startersubstanz zugegeben werden. Wird der Katalysator als Suspension zugegeben, wird diese bevorzugt in Schritt (α1) der H-funktionellen Startersubstanz(en) zugefügt.

Zu Schritt (β):

Die Dosierung eines oder mehrerer Alkylenoxide und gegebenenfalls des Kohlendioxids erfolgt nach der Trocknung einer Startersubstanz oder der Mischung mehrerer Startersubstanzen und der Zugabe des DMC-Katalysators, der vor oder nach der Trocknung der Startersubstanz als Feststoff oder in Form einer Suspension zugegeben wird. Wird der DMC-Katalysator nach der Trocknung der Startersubstanz zugegeben, so sollte dieser DMC-Katalysator vorzugsweise getrocknet sein, beispielsweise in einem analogen Verfahren wie die Trocknung der Startersubstanz. Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases wie beispielsweise Stickstoff eingestellt, wobei der Druck(absolut) zwischen 10 mbar bis 10 bar, vorzugsweise 100 mbar bis 8 bar und bevorzugt 500 mbar bis 6 bar eingestellt wird. In einer besonders bevorzugten Ausführungsform wird das aus Schritt (α) resultierende Gemisch aus einer oder mehrerer Starterverbindungen und dem DMC-Katalysator bei einer Temperatur von 100°C bis 130°C mindestens einmal, vorzugsweise dreimal mit 1,5 bar bis 10 bar (absolut), besonders bevorzugt 3 bar bis 6 bar (absolut) eines Inertgases (Stickstoff oder ein Edelgas wie beispielsweise Argon) beaufschlagt und jeweils unmittelbar anschließend bis innerhalb von 15 min wird der Überdruck auf ca. 1 bar (absolut) reduziert. Alternativ wird in einer ebenfalls besonders bevorzugten Ausführungsform in das aus Schritt (α) resultierende Gemisch aus einer oder mehrerern Starterverbindungen und dem DMC-Katalysator bei einer Temperatur von 40°C bis 150°C Inertgas (Stickstoff oder ein Edelgas wie beispielsweise Argon) eingeleitet und gleichzeitig ein reduzierter Druck (absolut) von 10 mbar bis 800 mbar, besonders bevorzugt von 50 mbar bis 200 mbar angelegt.

Zu Schritt (γ):

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen (Zugaben) erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren. Die Konzentration an freien Alkylenoxiden während der Reaktion in der Reaktionsmischung beträgt vorzugsweise > 0 bis 40 Gew.-%, besonders bevorzugt > 0 - 25 Gew-%, höchst bevorzugt > 0 - 15 Gew.-% (jeweils bezogen auf das Gewicht der Reaktionsmischung).

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Für das erfindungsgemäße Verfahren hat sich weiterhin gezeigt, dass die Copolymerisation zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, kommt die Reaktion zum Erliegen. Bei Temperaturen oberhalb von 150°C steigt die Menge an unerwünschten Nebenprodukten stark an. Weiterhin ist zu beachten, dass das $CO_2$ bei der Wahl von Druck und Temperatur vom gasförmigen Zustand möglichst in den flüssigen und/oder überkritischen flüssigen Zustand übergeht. $CO_2$ kann jedoch auch als Feststoff in den Reaktor gegeben werden und dann unter den gewählten Reaktionsbedingungen in den flüssigen und/oder überkritischen flüssigen Zustand übergehen.

Besonders bevorzugte Reaktoren sind: Rohrreaktor, Rührkessel, Schlaufenreaktor. Polyetherpolycarbonatpolyole können in einem Rührkessel hergestellt werden, wobei der Rührkessel je nach Ausführungsform und Betriebsweise über den Reaktormantel, innenliegende und/oder in einem Umpumpkreislauf befindliche Kühlflächen gekühlt wird. Aus Sicherheitsgründen sollte der Gehalt an freiem Epoxid 15 Gew.-% im Reaktionsgemisch des Rührkessels nicht übersteigen (siehe beispielsweise WO-A 2004/081082; Seite 3; Zeile 14). Sowohl in der semi-batch Anwendung, wo das

Produkt erst nach Ende der Reaktion entnommen wird, als auch in der kontinuierlichen Anwendung, wo das Produkt kontinuierlich entnommen wird, ist daher besonders auf die Dosiergeschwindigkeit des Epoxids zu achten. Sie ist so einzustellen, dass trotz der inhibierenden Wirkung des Kohlendioxids das Epoxid genügend schnell abreagiert. Es ist möglich, das Kohlendioxid kontinuierlich oder diskontinuierlich zuzuführen. Dies hängt davon ab, ob das Epoxid schnell genug verbraucht wird und ob das Produkt gegebenenfalls $CO_2$-freie Polyether-Blöcke enthalten soll. Die Menge des Kohlendioxids (angegeben als Druck) kann bei der Zugabe des Epoxids ebenso variieren. Es ist möglich, während der Zugabe des Epoxids den $CO_2$-Druck allmählich zu steigern oder zu senken oder gleich zu lassen.

Eine weitere mögliche Ausführungsform im Rührkessel für die Copolymerisation (Schritt $\gamma$) ist dadurch gekennzeichnet, dass eine oder mehrere H-funktionellen Starterverbindungen während der Reaktion kontinuierlich in den Reaktor zudosiert werden. Die Menge der H-funktionellen Starterverbindungen, die während der Reaktion kontinuierlich in den Reaktor zudosiert werden, beträgt bevorzugt mindestens 20 mol% Äquivalente, besonders bevorzugt 70 bis 95 mol% Äquivalente (jeweils bezogen auf die gesamte Menge an H-funktionellen Starterverbindungen).

Die aktivierte Katalysator-Starter-Mischung kann im Rührkessel, aber auch in einem anderen Reaktionsbehältnis (Rohrreaktor oder Schlaufenreaktor) mit Epoxid und Kohlendioxid (weiter) copolymerisiert werden.

Beim Rohrreaktor werden aktivierter Katalysator und Starter sowie Epoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner überkritischen Form, also quasi flüssig, zudosiert, um eine bessere Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Selbst Schlaufenreaktoren können zur Herstellung von Polyetherpolycarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder eine Schlaufe von Rohrreaktoren. Der Einsatz eines Schlaufenreaktors ist insbesondere deshalb von Vorteil, weil hier eine Rückvermischung realisiert werden kann, so dass die Epoxid-Konzentration gering sein sollte. Um vollständigen Umsatz zu realisieren, ist häufig ein Rohr ("Verweilrohr") nachgeschaltet.

Die erfindungsgemäß erhaltenen Polyethercarbonatpolyole haben eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidyletller, Allylglycidylether, Glycidylmethacrylat sowie epoxidfunktionelle Alkyoxysilane wie beispielsweise 3-Glycidyloxy-propyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeignete **H-funktionelle Startsubstanz** können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$ , besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt.. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG)

und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionelle Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol,Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO-(CH_2)_x-OH \qquad (II)$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionellen Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren zur Verwendung in der Homopolymerisation von Epoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden erhalten, indem man

(i) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (III),

$$M(X)_n \qquad (III)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M_r(X)_3 \qquad (IV)$$

wobei

M ausgewählt ist aus den Metallkationen $Fe^{3+}$, $Al^{3+}$, $Co^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$$M(X)_t \qquad (VI)$$

wobei

M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VII)

$$(Y)_aM'(CN)_b(A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x'},(CN)_y]_z \qquad (VIII),$$

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).
Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).
Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.
Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Poly-alkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.
Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00.) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen..Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), u m auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startverbindung basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Polydispersität, Funktionalität und/oder Hydroxylzahl erfüllen müssen.

## Beispiele

Das Gewichts- und Zahlenmittel des Molekulargewichts der entstandenen Polymere wurde mittels Gelpermeations-Chromatographie (GPC) bestimmt. Es wurde vorgegangen nach DIN 55672-1: "Gelpermeationschromatographie, Teil 1 - Tetrahydrofuran als Elutionsmittel". Dabei wurden Polystyrolproben bekannter Molmasse zur Kalibrierung verwendet.

Die OH-Zahl (Hydroxylzahl) wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (IX) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter)

Unter Berücksichtigung der relativen Intensitäten wurde gemäß der folgenden Formel (IX) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad (IX)$$

Der Gewichtsanteil (in Gew.-%) polymer-gebundenen Carbonats (LC') in der Reaktionsmischung wurde nach Formel (X) berechnet,

$$LC' = \frac{[F(5{,}1-4{,}8) - F(4{,}5)] * 102}{N} * 100\% \qquad (X)$$

wobei sich der Wert für N ("Nenner" N) nach Formel (XI) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad (XI)$$

Der Faktor 102 resultiert aus der Summe der Molmassen von $CO_2$ (Molmasse 44 g/mol) und der von Propylenoxid (Molmasse 58 g/mol), der Faktor 58 resulteirt aus der Molmasse von Propylenoxid und der Faktor 146 resultiert aus der Molmasse des eingesetzten Starters 1,8-Octandiol.

Der Gewichtsanteil (in Gew.-%) an cyclischem Carbonat (CC') in der Reaktionsmischung wurde nach Formel (XII) berechnet,

$$CC' = \frac{F(4{,}5) * 102}{N} * 100\% \qquad (XII)$$

wobei sich der Wert für N nach Formel (XI) berechnet.

Um aus den Werten der Zusammensetzung der Reaktionsmischung die Zusammensetzung bezogen auf den

Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol) sowie aus der Reaktion des Starters mit Epoxid resultiert, das unter $CO_2$-freien Bedingungen zugegeben wurde, wurde hierbei nicht berücksichtigt)..

Eingesetzte H-funktionelle Starterverbindungen:

1,8-Octandiol Fa. Sigma Aldrich
PET-1 Polyetherpolyol mit einer OH-Zahl von ca. 235 mg KOH/g, hergestellt durch Addition von Propylenoxid an Glycerin als Starterverbindung.

**Beispiel 1: Herstellung eines Polyethercarbonatpolyols (erfindungsgemäß)**

In einen 1 Liter Druckreaktor mit Gasdosierungseinrichtung wurden 141 mg getrockneter DMC-Katalysator, (hergestellt nach Beispiel 6 von WO-A 01/80994), sowie getrocknetes 51 g 1,8-Octandiol (Starter) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde 3-mal durchgeführt. In den Reaktor wurden bei 130 °C **[Temperatur 1]** und im Falle der erfindungsgemäßen Beispiele unter Abwesenheit von $CO_2$, also Null bar $CO_2$ (bzw. bei Vergleichsbeispielen dem in Tabelle 1 angegebenen Druck) **[$CO_2$-Druck 1]**, 25 g Propylenoxid (PO) [**PO-Menge 1]** eindosiert. Der Beginn der Reaktion machte sich durch eine Temperaturspitze ("Hotspot") und durch Druckabfall auf den Ausgangsdruck (ca. 1 bar) bemerkbar. Nach dem ersten Druckabfall wurden 20 g PO [**PO-Menge 2**] und dann 19 g PO [**PO-Menge 3**] schnell eindosiert, wodurch es wiederum jeweils zu einer Temperaturspitze und zu einem Druckabfall kam. Nachdem der Reaktor mit 50 bar $CO_2$ **[$CO_2$-Druck 2]** beaufschlagt worden war, wurden 50 g PO [**PO-Menge 4]** schnell eindosiert, wodurch es nach einer Wartezeit von 33 Minuten {Zeit 1} zu einer Temperaturspitze kam. Gleichzeitig dazu fing der Druck an Kohlendioxid $CO_2$ zu fallen an. Der Druck wurde so geregelt, dass bei Absinken unter den Sollwert neues $CO_2$ zugegeben wurde. Erst danach wurde das restliche Propylenoxid (435 g) **[PO-Rest]** kontinuierlich mit ca. 1,8 g/min in den Reaktor gepumpt, während in Schritten von 5°C pro fünf Minuten die Temperatur auf 105 °C gesenkt wurde. Nach beendeter PO-Zugabe wurde noch 60 Minuten bei 105 °C und dem oben angegebenen Druck weitergerührt (1500 U/min).

Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 19,9 Gew.%;
Selektivität angegeben als Verhältnis cyclisches Carbonat (unerwünschtes Nebenprodukt) zu Polyethercarbonatpolyol = 0,21;
Die OH-Zahl lag bei 67,2 mg/g.
Polydispersität 1,45.

**Beispiel 2 Herstellung eines Polyethercarbonatpolyols. (Vergleichsbeispiel)**

Durchführung erfolgte gemäß Beispiel 1 mit der Ausnahme, dass [$CO_2$-Druck 1] = [$CO_2$-Druck 2] = 50 bar war. Die Zeit bis zum vierten Hotspot {Zeit 1} betrug 24 Minuten.
Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 18,0 Gew.%;
Selektivität angegeben als Verhältnis cyclisches Carbonat (unerwünschtes Nebenprodukt) zu Polyethercarbonatpolyol = 0,27;
Die OH-Zahl lag bei 66,7 mg/g.
Polydispersität: 1,53

**Beispiel 3: Herstellung eines Polyethercarbonatpolyols. (Vergleichsbeispiel)**

Durchführung erfolgte gemäß Beispiel 1 mit der Ausnahme, dass [$CO_2$-Druck 1] = [$CO_2$-Druck 2] = 50 bar war

und derart, dass [PO-Menge 1] + [PO-Menge 2] + [PO-Menge 3] in einer Portion (64 g) zugegeben wurden.
Die Zeit bis zum Hotspot unter $CO_2$ {Zeit 1} betrug 8 Minuten.
Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 18,8 Gew.%;
Selektivität angegeben als Verhältnis cyclisches Carbonat (unerwünschtes Nebenprodukt) zu Polyethercarbonatpolyol = 0,24;
Die OH-Zahl lag bei 69,5 mg/g.
Polydispersität 1,85

**Beispiel 4: Herstellung eines Polyethercarbonatpolyols. (Vergleichsbeispiel)**

Durchführung erfolgte gemäß Beispiel 1 mit der Ausnahme, dass [PO-Menge 2], [PO-Menge 3] und [PO-Menge 4] nicht zugegeben wurden. Dies bedeutet, dass nur 25 g PO unter $CO_2$-freien Bedingungen zugegeben wurden, bevor unter 50 bar $CO_2$ kontinuierlich PO zur Copolymerisation zudosiert wurde.
Es kam zu einer deutlichen Anhäufung des PO (» 15 Gew.-%) im Reaktor, so dass die Reaktion aus Sicherheitsgründen abgebrochen wurde.

**Beispiel 5: Herstellung eines Polyethercarbonatpolyols. (Vergleichsbeispiel)**

Durchführung erfolgte gemäß Beispiel 1 mit der Ausnahme, dass [PO-Menge 1] + [PO-Menge 2] + [PO-Menge 3] in einer Portion (64 g) zugegeben wurden.
Infolge einer Anhäufung des PO im Reaktor kam es während der kontinuierlichen Zugabe des PO unter 50 bar $CO_2$ zu einem unerwarteten Hotspot ($\Delta T$ =31 °C). Ein sicheres Betreiben der Anlage ist bei solchen unerwarteten Hotspots nicht möglich.

**Beispiel 6: Herstellung eines Polyethercarbonatpolyols. (Vergleichsbeispiel)**

Durchführung erfolgte gemäß Beispiel 1 mit der Ausnahme, dass die PO-Mengen wie folgt verringert wurden:

[PO-Menge 1] = 8 g,
[PO-Menge 2] = 7 g,
[PO-Menge 3] = 6 g und
[PO-Menge 4] = 21 g.

Es kam zu einer deutlichen Anhäufung des PO (>> 15 Gew.-%) im Reaktor, so dass die Reaktion aus Sicherheitsgründen abgebrochen wurde.

**Beispiel 7: Herstellung eines Polyethercarbonatpolyols. (erfindungsgemäß)**

Durchführung erfolgte gemäß Beispiel 1 mit der Ausnahme, dass die PO-Mengen wie folgt vergrößert wurden:

[PO-Menge 1] = 33 g,
[PO-Menge 2] = 27 g,
[PO-Menge 3] = 25 g und
[PO-Menge 4] = 67 g.

Die Menge [PO-Rest] betrug 397 g.
Die Zeit bis zum vierten Hotspot {Zeit 1} betrug 21 Minuten.
Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 20,3 Gew.%;
Selektivität angegeben als Verhältnis cyclisches Carbonat (unerwünschtes Nebenprodukt) zu Polyethercarbonatpolyol = 0,18;
Die OH-Zahl lag bei 68,0 mg/g.
Polydispersität von 1,42

**Beispiel 8: Herstellung eines Polyethercarbonatpolyols (erfindungsgemäß)**

Durchführung erfolgte gemäß Beispiel 1 mit der Ausnahme, dass die [Temperatur 1] = 120 °C war. Die Zeit bis zum vierten Hotspot {Zeit 1} betrug 63 Minuten.
Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 20,9 Gew.%;
Selektivität angegeben als Verhältnis cyclisches Carbonat (unerwünschtes Nebenprodukt) zu Polyethercarbonatpolyol = 0,20;
Die OH-Zahl lag bei 70,6 mg/g.
Polydispersität von 1,38

**Beispiel 9: Herstellung eines Polyethercarbonatpolyols (erfindungsgemäß)**

Durchführung erfolgte gemäß Beispiel 1 mit der Ausnahme, dass die [Temperatur 1] = 110 °C war. Die Zeit bis zum vierten Hotspot {Zeit 1} betrug 141 Minuten.
Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 21,5 Gew.%;
Selektivität angegeben als Verhältnis cyclisches Carbonat (unerwünschtes Nebenprodukt) zu Polyethercarbonatpolyol = 0,19;
Die OH-Zahl lag bei 66,2 mg/g.
Polydispersität von 1,40

**Beispiel 10: Herstellung eines Polyethercarbonatpolyols (erfindungsgemäß)**

Durchführung erfolgte gemäß Beispiel 1 mit der Ausnahme, dass der [$CO_2$-Druck 2] = 30 bar war. Die Zeit bis zum vierten Hotspot {Zeit 1} betrug 20 Minuten. Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 20,2 Gew.%;
Selektivität angegeben als Verhältnis cyclisches Carbonat (unerwünschtes Nebenprodukt) zu Polyethercarbonatpolyol = 0,19;
Die OH-Zahl lag bei 66,5 mg/g.
Polydispersität von 1,39.

**Beispiel 11: Herstellung eines Polyethercarbonatpolyols. (erfindungsgemäß)**

Durchführung erfolgte gemäß Beispiel 1 mit der Ausnahme, dass der [$CO_2$-Druck 2] = 15 bar war. Die Zeit bis zum vierten Hotspot {Zeit 1} betrug 14 Minuten. Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 19,4 Gew.%;
Selektivität angegeben als Verhältnis cyclisches Carbonat (unerwünschtes Nebenprodukt) zu Polyethercarbonatpolyol = 0,18;
Die OH-Zahl lag bei 68,5 mg/g.
Polydispersität von 1,43

**Beispiel 12: Herstellung eines Polyethercarbonatpolyols. (erfindungsgemäß)**

Durchführung erfolgte gemäß Beispiel 1 mit der Ausnahme, dass der [$CO_2$-Druck 2] = 5 bar war. Die Zeit bis zum vierten Hotspot {Zeit 1} betrug 17 Minuten. Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 19,6 Gew.%;
Selektivität angegeben als Verhältnis cyclisches Carbonat (unerwünschtes Nebenprodukt) zu Polyethercarbonatpolyol = 0,15;
Die OH-Zahl lag bei 65,8 mg/g.

Polydispersität 1,69

**Beispiel 13: Herstellung eines Polyethercarbonatpolyols (Vergleichsbeispiel)**

Durchführung erfolgte gemäß Beispiel 1 mit der Ausnahme, dass der [$CO_2$-Druck 1] = 50 bar war. Nach Zugabe von der [PO-Menge 1] = 25 g wurde über die Dauer von zwei Stunden keine Katalysatoraktivierung deutlich anhand eines "Hotspots" beobachtet. Auch wurde kein $CO_2$ verbraucht. Der Versuch wurde daher abgebrochen.

**Beispiel 14: Herstellung eines Polyethercarbonatpolyols (erfindungsgemäß)**

Durchführung erfolgte gemäß Beispiel 1 mit der Ausnahme, dass die H-funktionelle Starterverbindung 1,8 Octandiol ersetzt wurde durch 161 g PET-1. Die Menge PO, die mit 1,8 g/min zugeben wurde, lag bei 387 g [PO-Rest].
Die Zeit bis zum vierten Hotspot {Zeit 1} betrug 8 Minuten. Das so hergestellte Polyethercarbonatpolyol zeichnet sich durch folgende Eigenschaften aus:

eingebautes $CO_2$ [Gew.%] bezogen auf den Teil des Polymers, der unter $CO_2$ gebildet wurde: 18,4 Gew.%;
Selektivität angegeben als Verhältnis cyclisches Carbonat (unerwünschtes Nebenprodukt) zu Polyethercarbonatpolyol = 0,11;
Die OH-Zahl lag bei 55,4 mg/g.
Polydispersität 1,17

In Tabelle 1 sind die Resultate der Polyethercarbonatpolyol-Herstellung zusammengefasst. Werden die ersten Aktivierungschritte in Gegenwart von $CO_2$ durchgeführt, so findet entweder überhaupt keine Aktivierung statt, sofern der Katalysator zuerst $CO_2$ und dann zeitverzögert Epoxid sieht (Vergleichsbeispiel 13) oder die Produktqualität wird schlechter (weniger $CO_2$-Einbau; schlechtere Selektivität, d.h. größeres Verhältnis cyclisch/linear; höhere Polydispersität) für den Fall, dass $CO_2$ und Epoxid gleichzeitig zugegeben werden (Vergleichsbeispiele 2 und 3). Vergleichsbeispiel 4 zeigt, dass eine einmalige Aktivierung unter $CO_2$-freien Bedingungen nicht notwendigerweise zur vollständigen Aktivierung des Katalysators führt, merkbar an der sicherheitstechnisch kritischen Anhäufung von Epoxid. Wird wie bei Vergleichsbeispiel 5 die bei einmaliger Aktivierung unter $CO_2$-freien Bedingungen eingesetzte Menge an PO erhöht auf 64 g (entspricht etwa 12 Gew.-% der Gesamtmenge des eingesetzten Epoxids), wird ein starker Temperaturanstieg festgestellt, was sicherheitstechnisch kritisch ist und daher der Versuch abzubrechen war.
Die Epoxidmengen zur Aktivierung sind nicht beliebig klein zu wählen, wenn der Katalysator vollständig aktiviert werden soll (Vergleichsbeispiel 6). Bei einer erfindungsgemäßen Menge an Epoxid in den Aktivierungsschritten wird eine gute Aktivierung des Katalysators erreicht (erfindungsgemäße Beispiele 1 und 7 bis 12).
Dabei wirkt sich bei den Aktivierungsschritten eine Temperatur von 120°C bzw. 110°C vorteilhaft aus hinsichtlich höherem $CO_2$-Einbau und einer besseren Selektivität (d.h. höherer Anteil an linearem Polyethercarbonatpolyol im Reaktionsprodukt; geringere Polydispersität) (erfindungsgemäße Beispiele 8 und 9).
Wird der $CO_2$-Druck bei der Aktivierung von 50 bar auf 30 bar, 15 bar und bis zu 5 bar verringert (siehe Beispiel 1 und Beispiele 10 bis 12), so wird bei in etwa vergleichbarem $CO_2$-Einbau die Zeit bis zur Aktivierung verkürzt und eine verbesserte Selektivität (kleineres Verhältnis cyclisch/linear) beobachtet, wobei bei einem $CO_2$-Druck bei der Aktivierung von nur noch 5 bar die Polydispersität ansteigt (Beispiel 12).

Tabelle 1: Resultate der Polyethercarbonatpolyol-Herstellung

| Aktivierungsschritt | β1 bis β4 | β1 bis β3 | β1 | β2 | β3 | β4 | β4 | | β4 | | | | |
|---|---|---|---|---|---|---|---|---|---|---|---|---|---|
| Beispiel | Temperatur 1 [°C] | CO2-Druck 1 [bar] | PO-Menge 1 [g] | PO-Menge 2 [g] | PO-Menge 3 [g] | CO2-Druck 2 [bar] | PO-Menge 4 [g] | PO-Rest [g] | Zeit 1 [min] | eingebautes $CO_2$ [Gew.-%] | Selektivität cyl./linear | OH-Zahl [mg /g] | Polydispersität |
| **1** | 130 | 0 | 25 | 20 | 19 | 50 | 50 | 435 | 33 | 19,9 | 0,21 | 67,2 | 1,45 |
| **2 (Vgl.)** | 130 | 50 | 25 | 20 | 19 | 50 | 50 | 435 | 24 | 18,0 | 0,27 | 66,7 | 1,53 |
| **3 (Vgl.)** | 130 | 50 | 64 | - | - | 50 | 50 | 435 | 8 | 18,8 | 0,24 | 69,5 | 1,85 |
| **4 (Vgl.)** | 130 | 0 | 25 | - | - | 50 | - | 524 | Anhäufung von PO, daher Abbruch des Versuchs | | | | |
| **5 (Vgl.)** | 130 | 0 | 64 | - | - | 50 | - | 485 | unerwarteter Hotspot (> 30 °C) | | | | |
| **6 (Vgl.)** | 130 | 0 | 8 | 7 | 6 | 50 | 21 | 507 | Anhäufung von PO, daher Abbruch des Versuchs | | | | |
| **7** | 130 | 0 | 33 | 27 | 25 | 50 | 67 | 397 | 21 | 20,3 | 0,18 | 68,0 | 1,42 |
| **8** | 120 | 0 | 25 | 20 | 19 | 50 | 50 | 435 | 63 | 20,9 | 0,20 | 70,6 | 1,38 |
| **9** | 110 | 0 | 25 | 20 | 19 | 50 | 50 | 435 | 141 | 21,5 | 0,19 | 66,2 | 1,40 |
| **10** | 130 | 0 | 25 | 20 | 19 | 30 | 50 | 435 | 20 | 20,2 | 0,19 | 66,5 | 1,39 |
| **11** | 130 | 0 | 25 | 20 | 19 | 15 | 50 | 435 | 14 | 19,4 | 0,18 | 68,5 | 1,43 |
| **12** | 130 | 0 | 25 | 20 | 19 | 5 | 50 | 435 | 17 | 19,6 | 0,15 | 65,8 | 1,69 |
| **13 (Vgl.)** | 130 | 50 | 25 | Keine Katalysatoraktivierung innerhalb von zwei Stunden | | | | | | | | | |
| **14** | 130 | 0 | 25 | 20 | 19 | 50 | 50 | 387 | 8 | 18,4 | 0,11 | 55,4 | 1,17 |
| Vgl. = Vergleichsbeispiel | | | | | | | | | | | | | |

**Patentansprüche**

1. Verfahren zur Herstellung von Polyethercarbonatpolyolen aus einer oder mehreren H-funktionellen Startsubstanzen, eines oder mehrerer Alkylenoxiden und Kohlendioxid in Gegenwart eines Doppelmetallcyanid-Katalysators, **dadurch gekennzeichnet, dass**

   ($\alpha$) der Doppelmetallcyanid-Katalysator und die H-funktionelle Startersubstanz oder ein Gemisch aus mindestens zwei H-funktionellen Startersubstanzen vorgelegt werden,
   ($\beta$) zur Aktivierung

      ($\beta$1) in einem ersten Aktivierungsschritt eine erste Teilmenge (bezogen auf die Gesamtmenge der bei der Aktivierung und Copolymerisation eingesetzten Menge an Alkylenoxiden) von einem oder mehrerer Alkylenoxiden zu der aus Schritt ($\alpha$) resultierenden Mischung zugesetzt wird, wobei diese Zugabe der Teilmenge an Alkylenoxid unter Abwesenheit von $CO_2$ erfolgt,
      ($\beta$2) in einem zweiten Aktivierungsschritt nach der im vorangegangenen Aktivierungsschritt erreichten Temperaturspritze eine zweite Teilmenge (bezogen auf die Gesamtmenge der bei der Aktivierung und Copolymerisation eingesetzten Menge an Alkylenoxiden) von einem oder mehrerer Alkylenoxiden zu der aus dem vorangegangenen Aktivierungsschritt resultierenden Mischung zugesetzt wird, wobei diese Zugabe der Teilmenge an Alkylenoxid unter Abwesenheit von $CO_2$erfolgt,
      ($\beta$3) in einem dritten Aktivierungsschritt bzw. weiteren Aktivierungsschritten nach der im vorangegangenen Aktivierungsschritt erreichten Temperaturspitze der Schritt ($\beta$2) ein bis fünfmal wiederholt wird, wobei diese Zugabe der Teilmenge bzw. Zugaben der Teilmengen an Alkylenoxid unter Abwesenheit von $CO_2$ erfolgt und

   ($\gamma$) ein oder mehrere Alkylenoxide und Kohlendioxid zu der aus Schritt ($\beta$) resultierenden Mischung zugesetzt werden ("Copolymerisation"),

   wobei die bei der Aktivierung in den Schritten $\beta$1 bis $\beta$4 jeweils eingesetzte Teilmenge von einem oder mehrerer Alkylenoxiden 2,0 bis 15,0 Gew.-% (bezogen auf die Gesamtmenge der bei der Aktivierung und Copolymerisation eingesetzten Menge an Alkylenoxiden) beträgt.

2. Verfahren gemäß Anspruch 1, wobei zur Aktivierung

   ($\beta$4) in einem weiteren Aktivierungsschritt bzw. weiteren Aktivierungsschritten nach der im vorangegangenen Aktivierungsschritt erreichten Temperaturspitze der Schritt ($\beta$3) ein bis fünfmal wiederholt wird, wobei diese Zugabe der Teilmenge bzw. Zugaben der Teilmengen an Alkylenoxid in Gegenwart von $CO_2$ erfolgt.

3. Verfahren gemäß Anspruch 2, wobei

   ($\alpha$) der Doppelmetallcyanid-Katalysator und die H-funktionelle Startersubstanz oder ein Gemisch aus mindestens zwei H-funktionellen Startersubstanzen vorgelegt werden,
   ($\beta$) zur Aktivierung

      ($\beta$1) in einem ersten Aktivierungsschritt eine erste Teilmenge (bezogen auf die Gesamtmenge der bei der Aktivierung und Copolymerisation eingesetzten Menge an Alkylenoxiden) von einem oder mehrerer Alkylenoxiden zu der aus Schritt ($\alpha$) resultierenden Mischung zugesetzt wird, wobei diese Zugabe der Teilmenge an Alkylenoxid unter Abwesenheit von $CO_2$ erfolgt,
      ($\beta$2) in einem zweiten Aktivierungsschritt nach der im vorangegangenen Aktivierungsschritt erreichten Temperaturspritze eine zweite Teilmenge (bezogen auf die Gesamtmenge der bei der Aktivierung und Copolymerisation eingesetzten Menge an Alkylenoxiden) von einem oder mehrerer Alkylenoxiden zu der aus dem vorangegangenen Aktivierungsschritt resultierenden Mischung zugesetzt wird, wobei diese Zugabe der Teilmenge an Alkylenoxid unter Abwesenheit von $CO_2$ erfolgt,
      ($\beta$3) in einem dritten Aktivierungsschritt nach der im vorangegangenen Aktivierungsschritt erreichten Temperaturspitze der Schritt ($\beta$2) genau einmal wiederholt wird, wobei diese Zugabe der Teilmenge bzw. Zugaben der Teilmengen an Alkylenoxid unter Abwesenheit von $CO_2$ erfolgt,
      ($\beta$4) in einem weiteren Aktivierungsschritt bzw. weiteren Aktivierungsschritten nach der im vorangegangenen Aktivierungsschritt erreichten Temperaturspitze der Schritt ($\beta$3) genau einmal wiederholt wird, wobei diese Zugabe der Teilmenge bzw. Zugaben der Teilmengen an Alkylenoxid in Gegenwart von $CO_2$ erfolgt,

(γ) ein oder mehrere Alkylenoxide und Kohlendioxid zu der aus Schritt (β) resultierenden Mischung zugesetzt werden ("Copolymerisation").

**4.** Verfahren gemäß einem der Ansprüche 1 bis 3, wobei in Schritt (α)

(α1) die H-funktionelle Startersubstanz oder ein Gemisch aus mindestens zwei H-funktionellen Startersubstanzen vorgelegt werden und
(α2) die Temperatur der Startersubstanz oder des Gemisches auf 50 bis 200°C gebracht wird und/oder der Druck im Reaktor auf weniger als 500 mbar eingestellt wird,

wobei der Doppelmetallcyanid-Katalysator der H-funktionellen Startersubstanz oder dem Gemisch von mindestens zwei H-funktionellen Startersubstanzen in Schritt (α1) oder unmittelbar anschließend an Schritt (α2) zugesetzt wird.

**5.** Verfahren gemäß einem der Ansprüche 1 bis 4, wobei die bei der Aktivierung in den Schritten β1 bis β4 jeweils eingesetzte Teilmenge von einem oder mehrerer Alkylenoxiden 2,5 bis 14,0 Gew.-% (bezogen auf die Gesamtmenge der bei der Aktivierung und Copolymerisation eingesetzten Menge an Alkylenoxiden) beträgt.

**6.** Verfahren gemäß einem der Ansprüche 1 bis 4, wobei die bei der Aktivierung in den Schritten β1 bis β4 jeweils eingesetzte Teilmenge von einem oder mehrerer Alkylenoxiden 3,0 bis 13,0 Gew.-% (bezogen auf die Gesamtmenge der bei der Aktivierung und Copolymerisation eingesetzten Menge an Alkylenoxiden) beträgt.

**7.** Verfahren gemäß Anspruch 1, wobei Schritt γ (Copolymerisation) bei 110 bis 120°C durchgeführt wird.

**8.** Verfahren gemäß Anspruch 1, wobei die eingesetzten H-funktionelle Startersubstanzen ausgewählt sind aus mindestens einer der Gruppe bestehend aus Wasser, Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten.

**9.** Verfahren gemäß Anspruch 8, wobei die eingesetzten H-funktionelle Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8 Octandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist und die Polyetherpolyole ein Molekulargewicht Mn im Bereich von 62 bis 4500 g/mol und eine Funktionalität von 2 bis 3 aufweisen.

**10.** Verfahren gemäß Anspruch 1, wobei der eingesetzte Doppelmetallcyanid-Katalysator mindestens eine Doppelcyanidverbindung ausgewählt aus der Gruppe bestehend aus Zinkhexacyanocobaltat(III), Zinkhexacyanoiridat(III), Zinkhexacyanoferrat(III) und Cobalt(II)hexacyanocobaltat(III) enthält.

**11.** Verfahren gemäß Anspruch 10, wobei der eingesetzte Doppelmetallcyanid-Katalysator zusätzlich mindestens einen organischen Komplexliganden enthält, der ausgewählt ist aus der Gruppe bestehend aus aliphatischem Ether, Ethanol, Isopropanol, n-Butanol, iso-Butanol, sek.-Butanol, tert-Butanol, 2-Methyl-3-buten-2-ol, 2-Methyl-3-butin-2-ol, Ethylenglykolmono-tert.-butylether, Diethylenglykol-mono-tert.-butylether, Tripropylenglykol-monomethylether und 3-Methyl-3-oxetan-methanol.

**12.** Verfahren gemäß Anspruch 1, welche in einem Rohrreaktor, Rührkessel oder Schlaufenreaktor durchgeführt wird.

**13.** Verfahren gemäß Anspruch 1 durchgeführt in einem Rührkessel, **dadurch gekennzeichnet, dass** in Schritt γ) eine oder mehrere H-funktionellen Starterverbindungen während der Reaktion kontinuierlich in den Reaktor zudosiert werden.

## Claims

1. Process for the preparation of polyether carbonate polyols from one or more H-functional starter substances, one or more alkylene oxides and carbon dioxide in the presence of a double metal cyanide catalyst, **characterised in that**

(α) the double metal cyanide catalyst and the H-functional starter substance, or a mixture of at least two H-functional starter substances, are placed in a reaction vessel,
(β) for activation

(β1) in a first activation step, a first partial amount (based on the total amount of the amount of alkylene oxides used in the activation and copolymerisation) of one or more alkylene oxides is added to the mixture resulting from step (α), wherein this addition of the partial amount of alkylene oxide takes place in the absence of $CO_2$,
(β2) in a second activation step, after the temperature peak reached in the preceding activation step, a second partial amount (based on the total amount of the amount of alkylene oxides used in the activation and copolymerisation) of one or more alkylene oxides is added to the mixture resulting from the preceding activation step, wherein this addition of the partial amount of alkylene oxide takes place in the absence of $CO_2$,
(β3) in a third activation step, or further activation steps, after the temperature peak reached in the preceding activation step, step (β2) is repeated from one to five times, wherein this addition of the partial amount, or these additions of the partial amounts, of alkylene oxide take(s) place in the absence of $CO_2$, and

(γ) one or more alkylene oxides and carbon dioxide are added to the mixture resulting from step (β) ("copolymerisation"),

wherein the partial amount of one or more alkylene oxides used in the activation in steps β1 to β4 is in each case from 2.0 to 15.0 wt.% (based on the total amount of the amount of alkylene oxides used in the activation and copolymerisation).

2. Process according to claim 1, wherein for the activation

(β4) in a further activation step, or further activation steps, after the temperature peak reached in the preceding activation step, step (β3) is repeated from one to five times, wherein this addition of the partial amount, or these additions of the partial amounts, of alkylene oxide take(s) place in the presence of $CO_2$.

3. Process according to claim 2, wherein

(α) the double metal cyanide catalyst and the H-functional starter substance, or a mixture of at least two H-functional starter substances, are placed in a reaction vessel,
(β) for activation

(β1) in a first activation step, a first partial amount (based on the total amount of the amount of alkylene oxides used in the activation and copolymerisation) of one or more alkylene oxides is added to the mixture resulting from step (α), wherein this addition of the partial amount of alkylene oxide takes place in the absence of $CO_2$,
(β2) in a second activation step, after the temperature peak reached in the preceding activation step, a second partial amount (based on the total amount of the amount of alkylene oxides used in the activation and copolymerisation) of one or more alkylene oxides is added to the mixture resulting from the preceding activation step, wherein this addition of the partial amount of alkylene oxide takes place in the absence of $CO_2$,
(β3) in a third activation step, after the temperature peak reached in the preceding activation step, step (β2) is repeated exactly once, wherein this addition of the partial amount, or these additions of the partial amounts, of alkylene oxide take(s) place in the absence of $CO_2$,
(β4) in a further activation step, or further activation steps, after the temperature peak reached in the preceding activation step, step (β3) is repeated exactly once, wherein this addition of the partial amount, or these additions of the partial amounts, of alkylene oxide take(s) place in the presence of $CO_2$,

(γ) one or more alkylene oxides and carbon dioxide are added to the mixture resulting from step (β) ("copolymerisation").

4. Process according to any one of claims 1 to 3, wherein in step (α)

(α1) the H-functional starter substance, or a mixture of at least two H-functional starter substances, is placed in a reaction vessel, and
(α2) the temperature of the starter substance, or of the mixture, is brought to from 50 to 200°C and/or the pressure in the reactor is adjusted to less than 500 mbar,

wherein the double metal cyanide catalyst is added to the H-functional starter substance, or to the mixture of at least two H-functional starter substances, in step (α1) or immediately after step (α2).

5. Process according to any one of claims 1 to 4, wherein the partial amount of one or more alkylene oxides used in the activation in steps β1 to β4 is in each case from 2.5 to 14.0 wt.% (based on the total amount of the amount of alkylene oxides used in the activation and copolymerisation).

6. Process according to any one of claims 1 to 4, wherein the partial amount of one or more alkylene oxides used in the activation in steps β1 to β4 is in each case from 3.0 to 13.0 wt.% (based on the total amount of the amount of alkylene oxides used in the activation and copolymerisation).

7. Process according to claim 1, wherein step γ (copolymerisation) is carried out at from 110 to 120°C.

8. Process according to claim 1, wherein the H-functional starter substances used are selected from at least one of the group consisting of water, alcohols, amines, thiols, aminoalcohols, thioalcohols, hydroxy esters, polyether polyols, polyester polyols, polyester ether polyols, polycarbonate polyols, polyether carbonate polyols, polyethyleneimines, polyether amines, polytetrahydrofurans, polyether thiols, polyacrylate polyols, castor oil, the mono- or di-glyceride of ricinoleic acid, monoglycerides of fatty acids, chemically modified mono-, di- and/or tri-glycerides of fatty acids, and $C_1$-$C_{24}$-alkyl fatty acid esters that contain on average at least 2 OH groups per molecule.

9. Process according to claim 8, wherein the H-functional starter substances used are selected from at least one of the group consisting of ethylene glycol, propylene glycol, 1,3-propanediol, 1,3-butanediol, 1,4-butanediol, 1,5-pentanediol, 2-methyl-1,3-propanediol, neopentyl glycol, 1,6-hexanediol, 1,8-octanediol, diethylene glycol, dipropylene glycol, glycerol, trimethylolpropane, di- and tri-functional polyether polyols, wherein the polyether polyol is composed of a di- or tri-H-functional starter substance and propylene oxide or of a di- or tri-H-functional starter substance, propylene oxide and ethylene oxide and the polyether polyols have a molecular weight Mn in the range from 62 to 4500 g/mol and a functionality of from 2 to 3.

10. Process according to claim 1, wherein the double metal cyanide catalyst used contains at least one double metal cyanide compound selected from the group consisting of zinc hexacyanocobaltate(III), zinc hexacyanoiridate(III), zinc hexacyanoferrate(III) and cobalt(II) hexacyanocobaltate(III).

11. Process according to claim 10, wherein the double metal cyanide catalyst used additionally contains at least one organic complex ligand selected from the group consisting of aliphatic ether, ethanol, isopropanol, n-butanol, isobutanol, sec-butanol, tert-butanol, 2-methyl-3-buten-2-ol, 2-methyl-3-butyn-2-ol, ethylene glycol mono-tert-butyl ether, diethylene glycol mono-tert-butyl ether, tripropylene glycol monomethyl ether and 3-methyl-3-oxetan-methanol.

12. Process according to claim 1, which is carried out in a tubular reactor, stirrer vessel or loop reactor.

13. Process according to claim 1 carried out in a stirrer vessel, **characterised in that** in step γ) one or more H-functional starter compounds are metered into the reactor continuously during the reaction.

## Revendications

1. Procédé pour la préparation de polyéthercarbonate-polyols à partir d'une ou de plusieurs substances de départ à fonctionnalité H, d'un ou de plusieurs oxydes d'alkylène et de dioxyde de carbone en présence d'un catalyseur de type cyanure métallique double (DMC), **caractérisé en ce que**

(α) le catalyseur de type cyanure métallique double et la substance de départ à fonctionnalité H ou un mélange d'au moins deux substances de départ à fonctionnalité H sont disposés au préalable,
(ß) pour l'activation

(ß1) dans une première étape d'activation, on ajoute une première quantité partielle (par rapport à la quantité totale de la quantité d'oxydes d'alkylène utilisée lors de l'activation et de la copolymérisation) d'un ou de plusieurs oxydes d'alkylène au mélange résultant de l'étape (α), cette addition de la quantité partielle d'oxyde d'alkylène ayant lieu en l'absence de $CO_2$,
(ß2) dans une deuxième étape d'activation après la pointe de température atteinte dans l'étape d'activation précédente, on ajoute une deuxième quantité partielle (par rapport à la quantité totale de la quantité d'oxydes d'alkylène utilisée lors de l'activation et de la copolymérisation) d'un ou de plusieurs oxydes d'alkylène au mélange résultant de l'étape d'activation précédente, cette addition de la quantité partielle d'oxyde d'alkylène ayant lieu en l'absence de $CO_2$,
(ß3) dans une troisième étape d'activation ou d'autres étapes d'activation après la pointe de température atteinte dans l'étape d'activation précédente, l'étape (ß2) est répétée une à cinq fois, cette addition de la quantité partielle ou ces additions des quantités partielles d'oxyde d'alkylène ayant lieu en l'absence de $CO_2$ et

(γ) on ajoute un ou plusieurs oxydes d'alkylène et du dioxyde de carbone au mélange résultant de l'étape (ß) ("copolymérisation"),

où la quantité partielle à chaque fois utilisée lors de l'activation dans les étapes ß1 à ß4 d'un ou de plusieurs oxydes d'alkylène représente 2,0 à 15,0% en poids (par rapport à la quantité totale de la quantité d'oxydes d'alkylène utilisée lors de l'activation et de la copolymérisation).

**2.** Procédé selon la revendication 1, dans lequel, pour l'activation

(ß4) dans une autre étape d'activation ou d'autres étapes d'activation après la pointe de température atteinte dans l'étape d'activation précédente, l'étape (ß3) est répétée une à cinq fois, cette addition de la quantité partielle ou ces additions des quantités partielles d'oxyde d'alkylène ayant lieu en présence de $CO_2$.

**3.** Procédé selon la revendication 2, où

(α) le catalyseur de type cyanure métallique double et la substance de départ à fonctionnalité H ou un mélange d'au moins deux substances de départ à fonctionnalité H sont disposés au préalable,
(ß) pour l'activation

(ß1) dans une première étape d'activation, on ajoute une première quantité partielle (par rapport à la quantité totale de la quantité d'oxydes d'alkylène utilisée lors de l'activation et de la copolymérisation) d'un ou de plusieurs oxydes d'alkylène au mélange résultant de l'étape (α), cette addition de la quantité partielle d'oxyde d'alkylène ayant lieu en l'absence de $CO_2$,
(ß2) dans une deuxième étape d'activation après la pointe de température atteinte dans l'étape d'activation précédente, on ajoute une deuxième quantité partielle (par rapport à la quantité totale de la quantité d'oxydes d'alkylène utilisée lors de l'activation et de la copolymérisation) d'un ou de plusieurs oxydes d'alkylène au mélange résultant de l'étape d'activation précédente, cette addition de la quantité partielle d'oxyde d'alkylène ayant lieu en l'absence de $CO_2$,
(ß3) dans une troisième étape d'activation après la pointe de température atteinte dans l'étape d'activation précédente, l'étape (ß2) est répétée exactement une fois, cette addition de la quantité partielle ou ces additions des quantités partielles d'oxyde d'alkylène ayant lieu en l'absence de $CO_2$,
(ß4) dans une autre étape d'activation ou d'autres étapes d'activation après la pointe de température atteinte dans l'étape d'activation précédente, l'étape (ß3) est répétée exactement une fois, cette addition de la quantité partielle ou ces additions des quantités partielles d'oxyde d'alkylène ayant lieu en présence de $CO_2$,

(γ) on ajoute un ou plusieurs oxydes d'alkylène et du dioxyde de carbone au mélange résultant de l'étape (ß) ("copolymérisation").

**4.** Procédé selon l'une quelconque des revendications 1 à 3, où, dans l'étape (α)

($\alpha$1) la substance de départ à fonctionnalité H ou un mélange d'au moins deux substances de départ à fonctionnalité H est disposé(e) au préalable,
($\alpha$2) la température de la substance de départ ou du mélange est amené à 50 jusqu'à 200°C et/ou la pression dans le réacteur est réglée à moins de 500 mbars,

le catalyseur de type cyanure métallique double étant ajouté à la substance de départ à fonctionnalité H ou au mélange d'au moins deux substances de départ à fonctionnalité H dans l'étape ($\alpha$1) ou immédiatement après l'étape ($\alpha$2).

**5.** Procédé selon l'une quelconque des revendications 1 à 4, où la quantité partielle à chaque fois utilisée lors de l'activation dans les étapes ß1 à ß4 d'un ou de plusieurs oxydes d'alkylène représente 2,5 à 14,0% en poids (par rapport à la quantité totale de la quantité d'oxydes d'alkylène utilisée lors de l'activation et de la copolymérisation).

**6.** Procédé selon l'une quelconque des revendications 1 à 4, où la quantité partielle à chaque fois utilisée lors de l'activation dans les étapes ß1 à ß4 d'un ou de plusieurs oxydes d'alkylène représente 3,0 à 13,0% en poids (par rapport à la quantité totale de la quantité d'oxydes d'alkylène utilisée lors de l'activation et de la copolymérisation).

**7.** Procédé selon la revendication 1, l'étape $\gamma$ (copolymérisation) étant réalisée à une température de 110°C à 120°C.

**8.** Procédé selon la revendication 1, les substances de départ à fonctionnalité H utilisées étant choisies parmi au moins un des groupes constitués par l'eau, les alcools, les amines, les thiols, les aminoalcools, les thioalcools, les hydroxyesters, les polyétherpolyols, les polyesterpolyols, les polyesterétherpolyols, les polycarbonatepolyols, les polyéthercarbonatepolyols, les polyéthylèneimines, les polyétheramines, les polytétrahydrofurannes, les polyétherthiols, les polyacrylatepolyols, l'huile de ricin, le monoglycéride ou le diglycéride de l'acide ricinoléique, les monoglycérides d'acides gras, les monoglycérides, diglycérides et/ou triglycérides chimiquement modifiés d'acides gras et les esters $C_1$-$C_{24}$-alkyliques d'acides gras qui contiennent en moyenne au moins 2 groupes OH par molécule.

**9.** Procédé selon la revendication 8, les substances de départ à fonctionnalité H utilisées étant choisies parmi au moins un des groupes constitués par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylèneglycol, le dipropylèneglycol, le glycérol, le triméthylolpropane, les polyétherpolyols difonctionnels et trifonctionnels, le polyétherpolyol étant formé à partir d'une substance de départ à 2 ou à 3 fonctionnalités H et d'oxyde de propylène ou à partir d'une substance de départ à 2 ou à 3 fonctionnalités H, d'oxyde de propylène et d'oxyde d'éthylène et les polyétherpolyols présentant un poids moléculaire Mn dans la plage de 62 à 4500 g/mole et une fonctionnalité de 2 à 3.

**10.** Procédé selon la revendication 1, le catalyseur de type cyanure métallique double utilisé contenant au moins un composé de type cyanure double choisi dans le groupe constitué par l'hexacyanocobaltate (III) de zinc, l'hexacyanoiridate (III) de zinc, l'hexacyanoferrate (III) de zinc et l'hexacyanocobaltate (III) de cobalt (II).

**11.** Procédé selon la revendication 10, le catalyseur de type cyanure métallique double utilisé contenant en plus au moins un ligand complexe organique, qui est choisi dans le groupe constitué par les éthers aliphatiques, l'éthanol, l'isopropanol, le n-butanol, l'iso-butanol, le sec-butanol, le tert-butanol, le 2-méthyl-3-butén-2-ol, le 2-méthyl-3-butyn-2-ol, l'éthylèneglycolmono-tert-butyléther, le diéthylèneglycolmono-tert-butyléther, le tripropylèneglycolmonométhyléther et le 3-méthyl-3-oxétaneméthanol.

**12.** Procédé selon la revendication 1, qui est réalisé dans un réacteur tubulaire, une cuve agitée ou un réacteur à boucle à circulation interne.

**13.** Procédé selon la revendication 1 réalisé dans une cuve agitée, **caractérisé en ce que** dans l'étape $\gamma$), un ou plusieurs composés de départ à fonctionnalité H sont dosés en continu dans le réacteur pendant la réaction.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0981407 A
- EP 1474464 A
- EP 0222453 A
- WO 2003029325 A
- WO 2008013731 A
- WO 2006103214 A
- US 20060223973 A
- US 2003149232 A
- DE 102008000478 A
- US 20080021154 A
- WO 2008058913 A
- WO 2004081082 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220